# EUROPÄISCHE PATENTSCHRIFT

(11) **EP 0 596 561 B1**
(45) Veröffentlichungstag und Bekanntmachung des Hinweises auf die Patenterteilung: **07.01.1998**
(21) Anmeldenummer: 93203010.9
(22) Anmeldetag: 28.10.1993
(51) Int. Cl.: H04N 5/44

(54) **Anordnung zur Verdopplung der Teilbildfrequenz eines Bildsignals**
Arrangement for doubling the frame frequency of a picture signal
Dispositif de doublement de la fréquence de trame d'un signal d'image

(30) Priorität: 04.11.1992 DE 4237225
(43) Veröffentlichungstag der Anmeldung: 11.05.1994
(73) Patentinhaber: Philips Patentverwaltung GmbH, 22335 Hamburg (DE); Philips Electronics N.V., 5621 BA Eindhoven (NL)
(72) Erfinder: Ibenthal, Achim, c/o PHILIPS PATENTVERWALTUNG GMBH, D-20097 Hamburg (DE); Dammann, Martin, c/o PHILIPS PATENTVERWALTUNG GMBH, D-20097 Hamburg (DE)
(74) Vertreter: von Laue, Hanns-Ulrich, Dipl.-Ing.

(56) Entgegenhaltungen:
- EP-A- 0 502 693
- IEEE 1990 INTERNATIONAL CONFERENCE ON CONSUMER ELECTRONICS, 6. Juni 1990, ROSEMONT, ILLINOIS Seiten 324 - 325 MIYAGUCHI ET AL. 'Digital TV with Serial Video Processor'
- IEEE TRANSACTIONS ON CONSUMER ELECTRONICS, Bd.38, Nr.3, August 1992, NEW YORK US Seiten 135 - 143 FILLIMAN ET AL. 'INTERLACE TO PROGRESSIVE SCAN CONVERTER FOR IDTV'

## Beschreibung

Die Erfindung betrifft eine Anordnung zur Konvertierung eines Original-Bildsignals, das als eine Folge von Vollbildern, von denen sich jedes aus zwei im Zeilensprungverfahren generierten Teilbildern zusammensetzt, in ein konvertiertes Bildsignal, das gegenüber dem Original-Bildsignal eine doppelte Teilbild-Frequenz aufweist.

Bei der Konvertierung eines Bildsignals in ein solches konvertiertes Bildsignal, das gegenüber dem ursprünglichen Bildsignal eine doppelte Teilbildfrequenz aufweist, besteht das Problem, daß jedes zweite Teilbild des konvertierten Bildsignals neu erzeugt werden muß, da zeitlich und auch bezüglich der Bildinformation kein entsprechendes Teilbild des Original-Bildsignals zur Verfügung steht.

Bei einfachen Anordnungen zur Verdoppelung der Teilbildfrequenz wird daher jedes zweite Teilbild verdoppelt. Hierbei wird ein bewegtes Objekt in den Teilbildern des konvertierten Bildsignals zweimal in derselben Position abgebildet, bevor es in den beiden darauffolgenden Teilbilder zur nächsten Position springt. Da das menschliche Auge diesen Sprüngen nicht folgen kann, fällt es auf die mittlere Bewegungsgeschwindigkeit ein und nimmt ein bewegtes Objekt von Teilbild zu Teilbild an jeweils verschiedenen Positionen wahr. Dadurch entsteht eine Doppelstruktur und Bewegungsunschärfe.

Daher ist bei anderen Anordnungen zur Teilbildverdoppelung eines Bildsignals eine Bewegungskompensation vorgesehen, mittels welcher die Bewegung zwischen zwei Teilbildern des Original-Bildsignals ermittelt wird, so daß in zeitlich dazwischen zu generierenden Teilbildern des konvertierten Bildsignals die Bewegung berücksichtigt werden kann und eine entsprechende Interpolation vorgenommen werden kann. Bei derartigen Anordnungen besteht jedoch weiterhin das Problem, daß zusätzlich ein gegebenenfalls vorhandenes Rauschen reduziert werden soll und daß das trotz der Verdoppelung der Teilbild-Frequenz bei Bildsignalen, die im Zeilensprungverfahren generiert sind, das immer noch auftretende Zeilenflimmern reduziert werden soll. Nach dem Stande der Technik sind nur Anordnungen bekannt, bei denen eine Bewegungskompensation entweder mit einer Rauschreduktion oder mit einer Zeilenflimmer-reduktion kombiniert ist.

Es ist Aufgabe der Erfindung, eine Anordnung zu schaffen, welche bei der Konvertierung des Bildsignals in ein konvertiertes Bildsignal mit doppelter Teilbildfrequenz die Bewegung des Bildinhaltes bei der Generierung der kompensierten Teilbilder berücksichtigt wird und welche außerdem eine Rauschreduktion des Bildsignals und eine Zeilenflimmer-reduktion gestattet.

Diese Aufgabe ist erfindungsgemäß dadurch gelöst, daß zur Verdoppelung der Teilbild-Frequenz eine Speicher-Anordnung vorgesehen ist, der eine Anordnung zur Bewegungskompensation nachgeschaltet ist, deren Ausgangssignal auf eine Anordnung zur Rauschreduktion geschaltet ist, daß eine Anordnung zur Zeilenflimmerreduktion vorgesehen ist, der die Ausgangssignale der Anordnung zur Rauschreduktion und der Anordnung zur Bewegungskompensation zugeführt werden, und daß das konvertierte Bildsignal in Abhängigkeit der zeitlichen Lage eines zu generierenden Teilbildes des konvertierten Bildsignals aus dem Ausgangssignal der Anordnung zur Rauschreduktion, der Anordnung zur Zeilenflimmerreduktion oder der Anordnung zur Bewegungskompensation gewonnen wird.

Die reine Verdoppelung der Teilbild-Frequenz wird mittels einer Speicher-anordnung vorgenommen. Dadurch werden die Teilbilder des Original-Bildsignals in doppelter Frequenz wiederholt, so daß eine doppelte Teilbild-Frequenz entsteht. Dieses Signal weist jedoch noch die oben erläuterten Fehler auf.

Daher ist eine Anordnung zur Bewegungskompensation vorgesehen, welche Bewegungen im Orignal-Bildsignal ermittelt und anhand der bekannten Bewegungen eine Kompensation dieser Bewegung in den neu zu generierenden Teilbildern des kompensierten Signals erlaubt.

Der Anordnung zur Bewegungskompensation ist eine Anordnung zur Rauschreduktion nach geschaltet, welche in an sich bekannter Weise zur Rauschreduktion die Daten zweier aufeinanderfolgender Teilbilder miteinander verknüpft.

Ferner ist eine Anordnung zur Zeilenflimmerreduktion vorgesehen, der die Ausgangssignale der Anordnung zur Bewegungskompensation und die Ausgangssignale der Anordnung zur Rauschreduktion zugeführt werden.

Das Ausgangssignal der Anordnung, also das konvertierte Bildsignal mit der doppelten Teilbild-Frequenz, wird in Abhängigkeit der zeitlichen Lage eines zu generierenden Teilbildes des konvertierten Bildsignals aus dem Ausgangssignal einer der drei genannten Anordnungen gewonnen. Dieser Wechsel zwischen den Ausgangssignalen der Anordnungen ist vorteilhaft, da je nach zeitlicher Lage der Teilbilder des konvertierten Bildsignals verschiedene Fehler auftreten. Bei einigen Teilbildern ist eine Bewegungskompensation erforderlich, da sie zeitlich zwischen zwei Teilbildern des Original-Bildsignals fallen. Bei solchen Teilbildern, die zeitlich mit Bildern des Original-Bildsignals zusammenfallen, ist dies nicht erforderlich. Die Zeilenflimmerreduktion wiederum ist nur bei solchen Teilbildern erforderlich, die infolge des Zeilensprung-Verfahrens nicht die richtige vertikale Position haben, verglichen mit den Teilbildern des Original-Bildsignals, aus denen sie generiert werden.

Die erfindungsgemäße Anordnung bietet also eine Kombination der Bewegungskonvensation mit der Zeilenflimmerreduktion und der Rauschreduktion.

Eine Ausgestaltung für die Anordnung sieht vor, daß das Original-Bildsignal in einen ersten Teilbildspeicher eingelesen wird, aus dem es mit doppelter Frequenz ausgelesen wird, wobei jedes Teilbild zweimal hintereinander ausgelesen wird, und daß ein zweiter Teilbildspeicher vorgesehen ist, in den jedes aus dem ersten Teilbildspeicher zum zweiten Mal ausgelesene Teilbild nach Durchlaufen der Anordnung zur Rauschreduktion eingelesen wird.

Der erste Teilbildspeicher dient also zur Verdoppelung der Teilbildfrequenz. Jedes in diesen Speicher eingelesene Teilbild wird zweimal hintereinander ausgelesen. Ein zweiter Teilbildspeicher arbeitet bereits eingangsseitig mit dieser doppelten Teilbild-Frequenz, da in diesen jedes Teilbild, das aus dem ersten Teilbildspeicher zum zweiten Mal ausgelesen wurde und daß die Anordnung zur Rauschreduktion durchlaufen hat, eingelesen wird. Nach dem Einlesen steht dieses rauschreduzierte Teilbild ausgangsseitig am zweiten Teilbildspeicher zur Verfügung.

Damit stehen zur Bewegungskompensation an den Ausgängen der beiden Teilbildspeicher zwei Teilbilder des Original-Bildsignals, jedoch mit verdoppelter Teilbild-Frequenz, zur Verfügung. Eines dieser Teilbilder ist bereits rauschreduziert, was der Anordnung zur Bewegungskompensation die Ermittlung der Bewegung vereinfacht.

Wie nach einer weiteren Ausgestaltung der Erfindung vorgesehen ist, kann den beiden Teilbildspeichern ein Zeilenspeicher nachgeschaltet sein, welcher eine Bildzeile eines der Ausgangssignale der beiden Teilbilder zwischenspeichert. Damit ist für eines der Teilbilder zeitlich parallel eine Information zweier aufeinanderfolgender Bildzeilen vorhanden, was für die nachgeschaltete Zeilenflimmer-Reduktion von Vorteil ist.

Die Anordnung zur Zeilenflimmer-Reduktion kann, wie nach einer weiteren Ausgestaltung der Erfindung vorgesehen ist, vorteilhalft als Medianfilter ausgelegt sein, welches ausgangsseitig dasjenige Eingangssignal zur Verfügung stellt, das den mittleren Amplitudenwert der Eingangssignale aufweist.

Gemäß einer weiteren Ausgestaltung der Erfindung ist vorgesehen, daß der Anordnung zur Bewegungskompensation die Ausgangssignale der beiden Teilbildspeicher und des Zeilenspeichers zugeführt werden, und daß die Anordnung zur Bewegungskompensation aus den beiden aus den Teilbildspeichern ausgelesenen, aufeinanderfolgenden Teilbildern des Original-Bildsignals einen Bewegungsvektor ermittelt, der für eine Gruppe von Bildpunkten dieser Teilbilder deren Bewegung zwischen den beiden Teilbildern angibt.

Dieser Bewegungsvektor kann dazu eingesetzt werden, in denjenigen Teilbildern des konvertierten Teilbildsignals eine Bewegungskompensation vorzunehmen, die zeitlich zwischen zwei Teilbilder des Original-Bildsignals fallen.

Eine weitere Ausgestaltung der Erfindung sieht für die Anordnung vor, daß diese zu zwei Teilbildern eines Vollbildes des Original-Bildsignals, eine korrespondierende Sequenz von vier Teilbildern (A1₁₀₀, B⁻₁₀₀, B1*₁₀₀, B1⁺₁₀₀) des konvertierten Bildsignals generiert, wobei das erste Teilbild (A1₁₀₀) der Sequenz aus dem Ausgangssignal der Anordnung zur Rauschreduktion, das zweite und dritte Teilbild (B1⁻₁₀₀, B1*₁₀₀) der Sequenz aus dem Ausgangssignal zur Zeilenflimmerreduktion und das vierte Teilbild (B1⁺₁₀₀) der Sequenz aus der Anordnung zur Bewegungskompensation gewonnen wird.

Infolge der verdoppelten Teilbild-Frequenz des konvertierten Bildsignals müssen in einem zeitlichen Bereich, in dem zwei Teilbilder des Original-Bildsignals vorliegen, vier Teilbilder des konvertierten Bildsignals erzeugt werden. Im folgenden werden diese zwei Teilbilder des Original-Bildsignals und die vier Teilbilder der entsprechenden Sequenz des konvertierten Bildsignals als korrespondierende Teilbilder bzw. korrespondierende Sequenz bezeichnet.

Das erste Teilbild der Sequenz wird aus dem Ausgangssignal der Anordnung zur Rauschreduktion gewonnen. Dies ist möglich, da dieses erste Teilbild der Sequenz gegenüber dem ersten korrespondierenden Teilbild des Original-Bildsignals zeitlich und örtlich die richtige Lage hat und lediglich eine Rauschreduktion vorgenommen werden muß.

Das zweite und dritte Teilbild der Sequenz wird aus dem Ausgangssignal zur Zeilenflimmerreduktion gewonnen, da für diese beiden Teilbilder beide Teilbilder des Original-Bildsignals herangezogen werden müssen, von denen zumindest jeweils eines nicht die richtige zeitliche Lage hat und infolge des angewandten Zeilensprungverfahrens auch nicht die richtige vertikale Position hat.

Das Signal für das vierte Teilbild der Sequenz wird aus der Anordnung zur Bewegungskompensation gewonnen, da dieses Signal nur durch Anwendung der Bewegungskompensation aus dem zweiten korrespondierenden Teilbild des Original-Bildsignals gewonnen werden kann.

In den weiteren Unteransprüchen ist angegeben, wie die Anordnung vorteilhafterweise die vier Teilbilder zur Sequenz des konvertierten Bildsignals aus dem korrespondierenden beiden Teilbildes des Original-Bildsignals generiert.

Ein Ausführungsbeispiel der Erfindung wird nachfolgend anhand der Zeichnung näher erläutert. Es zeigen:
Fig. 1 ein Blockschaltbild der erfindungsgemäßen Anordnung zur Konvertierung eines Original-Bildsignals in ein konvertiertes Bildsignal mit doppelter Teilbild-Frequenz,
Fig. 2 eine Tabelle der in die Speicheranordnung gemäß Fig. 1 ein- bzw. ausgelesenen Teilbilder,
Fig. 3 ein Schema, nach dem die Anordnung gemäß Fig. 1 das erste Teilbild einer Sequenz des konvertierten Bildsignals generiert,
Fig. 4 eine Darstellung entsprechend Fig. 3 für das zweite Teilbild der Sequenz,
Fig. 5 eine Darstellung entsprechend Fig. 3 für das dritte Teilbild der Sequenz, und
Fig. 6 eine Darstellung entsprechend Fig. 3 für das vierte Teilbild der Sequenz.

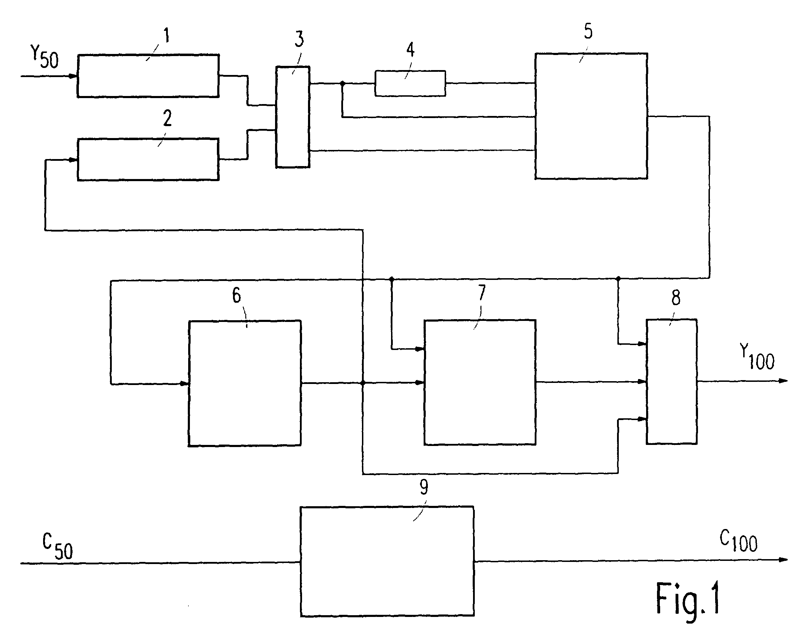

Fig. 1 zeigt ein Blockschaltbild der erfindungsgemäßen Anordnung, die eine Verdoppelung der Teilbild-Frequenz eines Original-Bildsignals gestattet und so ein konvertiertes Bildsignal generiert, wobei dieses generierte Bildsignal rauschreduziert ist, und die für die Teilbilder erfordlichenfalls eine Zeilenflimmerreduktion und eine Bewegungskompensation vornimmt.

Die Anordnung gemäß Fig. 1 gliedert sich in zwei Blöcke, von denen der erste Block das ihm zugeführte Luminanzsignal Y₅₀ des Original-Bildsignals bearbeitet und der zweite Block das ihm zugeführte Chromasignal C₅₀ des Original-Bildsignals. In dem in der Fig. 1 dargestellten Beispiel wird das Chromasignal lediglich bezüglich seiner Frequenz verdoppelt. Die besondere Vorgehensweise mit Rauschreduktion und Zeilenflimmerreduktion wird in dem Beispiel gemäß Fig. 1 nur für das Luminanzsignal vorgenommen. Es ist jedoch auch möglich, diese Maßnahmen sowohl für das Luminanzsignal wie auch für das Chromasignal vorzunehmen.

Der Luminanzsignalanteil Y₅₀ des Original-Bildsignals gelangt in der Anordnung gemäß Fig. 1 auf einen ersten Teilbildspeicher 1, mittels welchem die Teilbild-Frequenz dieses Signals verdoppelt wird. Jedes in den Teilbildspeicher 1 eingelesene Teilbild des Original-Bildsignals wird anschließend zweimal ausgelesen. Dieses Auslesen geschieht mit doppelter Frequenz. Damit wird bereits eine einfache Verdoppelung der Teilbild-Frequenz vorgenommen. Das Ausgangssignal dieses Teilbildspeichers ist jedoch zur Darstellung auf einem Bildschirm nur unter Inkaufnahme von Bewegungsstörungen und Zeilenflimmern geeignet.

Es ist ferner ein zweiter Teilbildspeicher 2 vorgesehen, dem eingangsseitig noch zu erläuternde Teilbild-Signale zugeführt werden, die bereits die doppelte Teilbild-Frequenz aufweisen. Damit stehen an den Ausgängen der beiden Teilbildspeicher 1 und 2 parallel die Signale zweier aufeinanderfolgender Teilbilder des Original-Bildsignals zur Verfügung, die bezüglich ihrer Teilbild-Frequenz bereits verdoppelt sind.

Den beiden Teilbildspeichern 1 und 2 ist ein Multiplexer 3 nachgeschaltet, der es gestattet, alternativ eines der Ausgangssignale der Teilbildspeicher 1 und 2 auf einen Zeilenspeicher 4 zu schalten. Über den Multiplexer 3 gelangen die Ausgangssignale beider Teilbildspeicher 1 und 2 an eine Anordnung 5 zur Bewegungskompensation. Der Anordnung 5 werden also die Signale der beiden Teilbildspeicher 1 und 2 und damit zweier aufeinanderfolgender, in ihrer Teilbildfrequenz bereits verdoppelter Teilbilder des Original-Bildsignals zugeführt. Durch den Einsatz des Zeilenspeichers 4 stehen für eines der beiden Teilbildsignale gleichzeitig die Werte zweier Bildpunkte gleicher Zeilenposition von aufeinanderfolgenden Bildzeilen zur Verfügung.

Die Anordnung 5 zur Bewegungskompensation ermittelt aus den beiden ihr zugeführten Teilbildern eine Bewegung, die in den Bildinhalten zwischen diesen beiden Teilbildern vorliegt. Vorteilhafterweise wird für eine Gruppe von Bildpunkten aus dieser ermittelten Bewegung ein Bewegungsvektor gewonnen, der die Bewegung zwischen den beiden Teilbildern für eine Gruppe von Bildpunkten angibt. Die Anordnung 5 zur Bewegungskompensation kann diese Bewegung sowohl in horizontaler wie auch in vertikaler Richtung, d.h. also in Zeilenrichtung wie auch in Richtung senkrecht zu den Zeilen ermitteln. Es kann jedoch auch ausschließlich eine Ermittlung der Bewegung in Zeilenrichtung vorgenommen werden, die im Schaltungsaufbau sehr viel einfacher zu realisieren ist und auch gute Ergebnisse liefert.

Die Anordnung gemäß Fig. 1 weist ferner eine Anordnung 6 zur Rauschreduktion auf. Diese Anordnung 6 arbeitet in an sich bekannter Weise, in dem sie die Signale von Bildpunkten jeweils gleicher Lage aufeinanderfolgender Teilbilder miteinander kombiniert. Diese Signale werden der Anordnung 6 von der Anordnung 5 zugeführt. Da die Anordnung 5 bereits den entsprechenden Bewegungsvektor ermittelt hat, kann in der Anordnung 6 die Rauschreduktion bereits mit bewegungskompensierten Signalen vorgenommen werden.

Das Ausgangssignal der Anordnung 6 zur Rauschreduktion gelangt auf den Eingang des zweiten Teilbildspeichers 2, auf einen Eingang einer Anordnung 7 zur Zeilenflimmerreduktion und auf einen ersten Eingang eines Multiplexers 8. In den Teilbildspeicher 2 wird damit eingangsseitig ein bereits rauschreduziertes Signal eingelesen, das demjenigen Teilbild entspricht, das aus dem ersten Teilbildspeicher 1 bereits zum zweiten Mal ausgelesen wird.

Der Anordnung zur Zeilenflimmer-Reduktion 7, die beispielsweise als Medianfilter ausgelegt sein kann, welches aus dem ihm zugeführten Signal jeweils dasjenige mit dem mittleren Amplituden-Momentanwert auswählt, wird außer dem Ausgangssignal der Anordnung 6 auch noch das Ausgangssignal der Anordnung 5 zur Bewegungskompensation zugeführt, da dieses Ausgangssignal auch dasjenige bewegungskompensierte Ausgangssignal des Zeilenspeichers 4 enthält. Dieses ist erforderlich, da für die Zeilenflimmer-Reduktion eine vertikale Interpolation vorgenommen werden muß und somit die Signale korrespondierender Bildpunkte, d.h. also Bildpunkte gleicher Lage in ihrer Zeile, aus zwei Zeilen vorliegen müssen.

Die Anordnung 7 zur Zeilenflimmer-Reduktion erhält außer diesen Signalen zweier aufeinanderfolgender Bildzeilen eines Teilbildes aus der Anordnung 6 das Signal eines anderen Teilbildes. In noch näher zu erläuterender Weise wird aus diesen Signalen eine Medianfilterung vorgenommen, die zu einer Zeilenflimmer-Reduktion führt.

Das Ausgangssignal der Anordnung 7 zur Zeilenflimmer-Reduktion wird einem zweiten Eingang des Multiplexers 8 zugeführt. Ein dritter Eingang des Multiplexers 8 ist mit dem Ausgangssignal der Anordnung 5 zur Rauschreduktion beaufschlagt.

Der Multiplexer 8 liefert ausgangsseitig das Luminanzsignal Y₁₀₀, das das konvertierte Bildsignal darstellt und daß gegenüber dem Eingangssignal Y₅₀ eine verdoppelte Teilbild-Frequenz aufweist. Der Multiplexer 8 wird je nach zu generierenden Teilbild in noch zu erläuternder Weise zwischen seinen drei Eingängen umgeschaltet.

Die Fig. 1 zeigt ferner einen Schaltungsblock 9, in dem eine Verdoppelung der Teilbild-Frequenz des Farbsignal-Anteils C₅₀ des Original-Bildsignals vorgenommen wird. Dies kann in gleicher Weise geschehen wie für das Luminanzsignal, es kann jedoch auch ausschließlich einer Verdoppelung der Teilbild-Frequenz vorgenommen werden. Die Einheit 9 liefert ausgangsseitig den Farbsignalanteil des konvertierten Bildsignals.

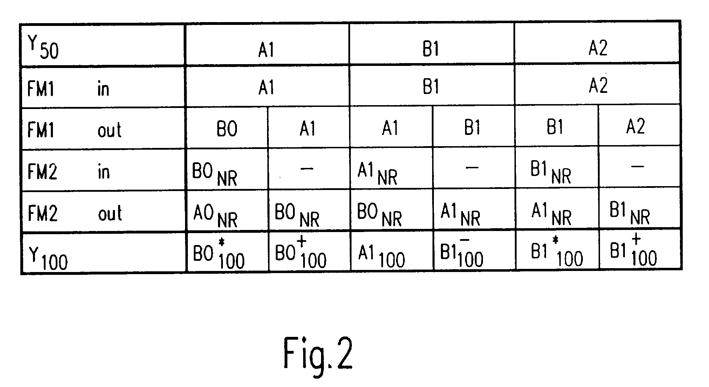

Fig. 2 zeigt eine Tabelle, in der schematisch angedeutet ist, welche Teilbilder in die Teilbildspeicher 1 und 2 der Darstellung gemäß Fig. 1 eingelesen werden bzw. aus diesen ausgelesen werden.

Zwei aufeinanderfolgende Teilbilder des Original-Bildsignals sind in unveränderter Form z.B. als A1, B1 und A2, B2 etc. gekennzeichnet. Zwei Teilbilder mit gleicher Bezifferung gehören dabei zu einem Vollbild. Die beiden Teilbilder sind im Zeilensprungverfahren generiert.

Wie die Tabelle gemäß Fig. 2 zeigt, werden beispielsweise zwei Teilbilder A1 und B1 eines Vollbildes des Original-Bildsignals in den Teilbilderspeicher 1, gemäß Fig. 1, der in Fig. 2 mit FM1 bezeichnet ist, eingelesen. Jedes dieser beiden Teilbilder wird nachfolgend aus dem Teilbildspeicher 1 zweimal ausgelesen, wobei dieses Auslesen mit doppelter Frequenz erfolgt, so daß die Teilbild-Frequenz dieser Bilder bereits verdoppelt ist.

Wird ein Teilbild zum zweiten Mal aus dem ersten Teilbildspeicher 1 ausgelesen, so gelangt dieses Signal, nachdem es die Anordnung 5 und die Anordnung 6 gemäß Fig. 1 durchlaufen hat, an den Eingang des Teilbildspeichers 2, der in der Tabelle gemäß Fig. 2 mit FM2 bezeichnet ist. Beim nächsten Auslesevorgang der Teilbilderspeicher 1 und 2 stehen dabei an deren Ausgängen jeweils zwei Teilbilder zur Verfügung, die in ihrer Teilbild-Frequenz bereits verdoppelt sind. Da eines der Teilbilder, nämlich dasjenige, das in den Teilbilderspeicher 2 eingelesen wurde, bereits die Rauschreduktion durchlaufen hat, ist dieses bereits rauschreduziert, was in der Darstellung der Tabelle gemäß Fig. 2 mit den Indices NR gekennzeichnet ist.

Im Ergebnis stehen an den Ausgängen der Teilbildspeicher 1 und 2 der Darstellung gemäß Fig. 1 zwei Teilbilder zur Verfügung, die aus dem Original-Bildsignal hervorgehen, die jedoch bereits verdoppelte Teilbild-Frequenz aufweisen.

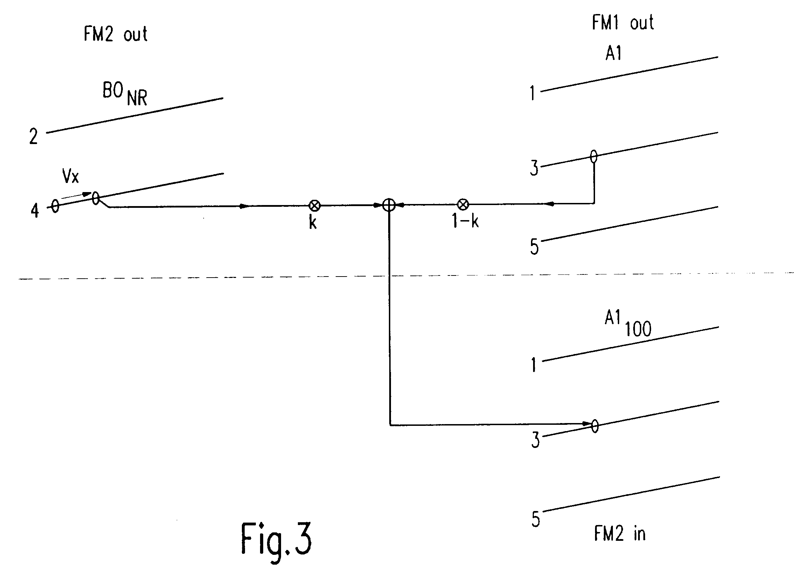

Im folgenden soll anhand der Fig. 3 bis 6 näher erläutert werden, wie die vier Teilbilder A1₁₀₀, B1⁻100, B1*100 und B1⁺100des Ausgangssignals Y₁₀₀ entsprechend der Tabelle gemäß Fig. 2, die die Ausgangssignale des Multiplexers 8 der Darstellung gemäß Fig. 1 sind, gewonnen werden. Diese vier Teilbilder werden im folgenden als zu einer Sequenz zugehörig bezeichnet. Zu dieser Sequenz korrespondiert ein Vollbild des Original-Bildsignals, bzw. zwei Teilbilder dieses Signals, nämlich die Teilbilder A1 und B1. Im folgenden werden die vier Teilbilder der Sequenz als korrespondierend mit diesen vier Teilbildern des Original-Bildsignals bezeichnet.

Fig. 3 zeigt in einer schematischen Darstellung oberhalb einer gestrichelten Linie zwei Teilbilder B0_{NR} und A1 des Original-Bildsignals, wie sie aus den beiden Teilbildspeichern 1 und 2 der Darstellung gemäß Fig. 1 ausgelesen werden. Unterhalb der gestrichelten Linie ist ein Teilbild A1₁₀₀ dargestellt, das das erste Teilbild einer Sequenz des konvertierten Bildsignals darstellt. Dieses Signal des Teilbildes A1₁₀₀ ist durch die Anordnung gemäß Fig. 1 zu erzeugen.

Dazu wird einerseits das Ausgangssignal des ersten Teilbildspeichers 1 herangezogen, aus dem das Teilbild A1 des Original-Bildsignals (mit verdoppelter Teilbild-Frequenz) ausgelesen wird. In den Teilbildspeicher 2 wurde zuvor bereits das Teilbild B0 des Original-Bildsignals, jedoch in rauschreduzierter Form, eingelesen. Dieses Signal steht nun ausgangsseitig gleichzeitig mit dem Signal A1 als Signal B0_{NR} am Ausgang des zweiten Teilbildspeichers zur Verfügung. Aus diesen beiden Ausgangssignalen der Teilbildspeicher 1 und 2 wird entsprechend der schematischen Darstellung in Fig. 3 das erste Teilbild A1₁₀₀ der Sequenz gewonnen.

Dieses zu generierende Teilbild A1₁₀₀ hat gegenüber dem Teilbild A1 des Original-Bildsignals vertikal und zeitlich die richtige Position. Es muß daher nur eine Rauschreduktion zugeführt werden, insbesondere ist eine Zeilenflimmer-Reduktion nicht erforderlich.

Für die Rauschreduktion werden die Ausgangssignale der Teilbildspeicher 1 und 2 herangezogen, wobei es vorteilhaft ist, das Teilbild, das aus dem Teilbildspeicher 2 ausgelesen wurde, und das gegenüber dem zu generierenden Teilbild A1₁₀₀ nicht die richtige zeitliche Position hat, in seinem Bildinhalt einer Bewegungskompensation zu unterziehen. Dazu wird der von der Anordnung 5 zur Bewegungskompensation entsprechend der Fig. 1 ermittelte Bewegungsvektor herangezogen. Dieser Bewegungsvektor ist in der Fig. 3 mit vₓ bezeichnet.

Für einen in der Fig. 3 in dem Teilbild A1₁₀₀ in dessen Bildzeile 3 gekennzeichneten Bildpunkt wird nun einerseits der Bildpunkt gleicher Zeilenposition und gleicher Zeilenzahl aus dem Teilbild A1₁₀₀, wie aus dem Teilbildspeicher 1 ausgelesen wird, herangezogen. Ferner wird der um den Bewegungsvektor vₓ verschobene Bildpunkt des Teilbildes B0_{NR}, wie es aus dem zweiten Teilbildspeicher ausgelesen wird, verwendet. Dieser Bildpunkt wird der Zeile 4 entnommen. Aus diesen beiden Bildpunkten der beiden Teilbilder wird ein rauschreduziertes Signal gewonnen. Dafür ist ein Faktor k vorgesehen, der angibt, wie stark die Rauschreduktion erfolgen soll. Der Bildpunkt aus dem Teilbild A1 wird mit einem Faktor 1-k und der Bildpunkt aus dem Teilbild B0_{NR} mit einem Faktor k multipliziert. Diese beiden multiplizierten Werte werden addiert und bilden den Wert des gekennzeichneten Bildpunktes des Teilbildes A1₁₀₀.

Wird k klein gewählt, so soll nur eine geringe oder gar keine Rauschreduktion vorgenommen werden und dieser Bildpunkt wird im wesentlichen aus dem korrespondierenden Bildpunkt des Teilbildes A1 gewonnen. Mit größerem Faktor k wird zunehmend auch der Wert des Bildpunktes aus dem Teilbild B0_{NR} herangezogen.

Das generierte Teilbild A1₁₀₀ entspricht also bis auf die vorgenommene Rauschreduktion dem Teilbild A1 des Original-Bildsignals. ES wird in den zweiten Teilbildspeicher 2 gemäß Fig. 1 eingelesen und steht für nachfolgend zu generierende Teilbilder in diesem als A1_{NR} zur Verfügung.

Während der Generierung des ersten Teilbildes A1₁₀₀ ist der Multiplexer 8 entsprechend der Darstellung gemäß Fig. 1 auf seinen ersten Eingang geschaltet, da hier die Ausgangssignale der Rauschreduktion entsprechend der schematischen Darstellung in Fig. 3 als Ausgangssignal und damit als Signal für das Teilbild A1₁₀₀ herangezogen werden.

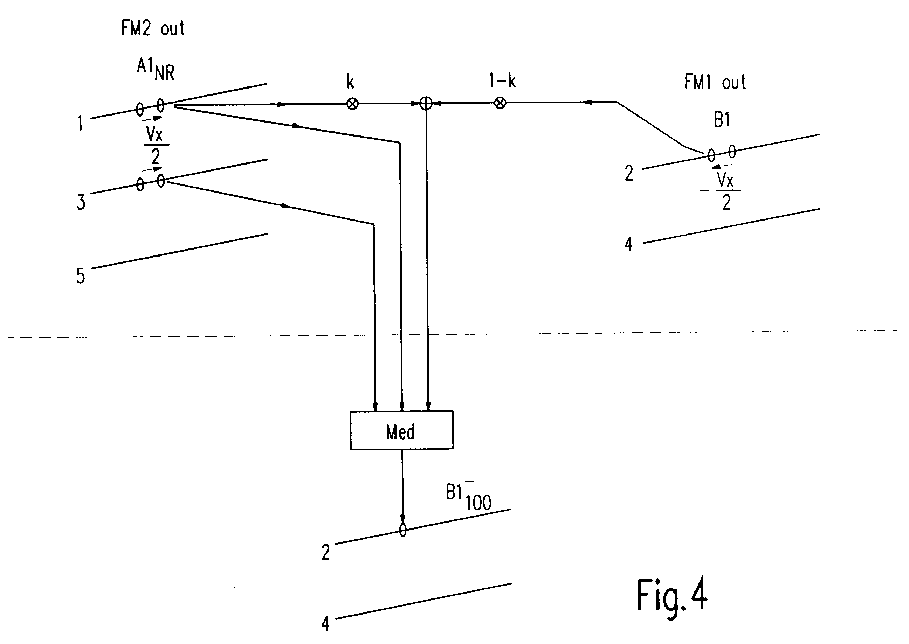

Fig. 4 zeigt eine Darstellung entsprechend Fig. 3, jedoch für die Gewinnung des zweiten Teilbildes B1⁻₁₀₀ der Sequenz.

Dieses zweite Teilbild der Sequenz hat gegenüber den beiden Teilbildern des Original-Bildsignals weder vertikal noch zeitlich die richtige Position. Es wird daher eine Bewegungskompensation und eine Zeilenflimmer-Reduktion vorgenommen.

Zum Zeitpunkt der Generierung dieses zweiten Teilbildes wird aus dem ersten Teilbildspeicher das Teilbild B1 des Original-Bildsignals und aus dem zweiten Teilbildspeicher das Teilbild A1 des Original-Bildsignals, jedoch in rauschreduzierter Form, ausgelesen.

In der Darstellung gemäß Fig. 4 ist für das Teilbild B1⁻₁₀₀ ein Bildpunkt der Bildzeile 2 gekennzeichnet. Der Wert dieses Bildpunktes wird durch Medianfilterung aus drei Werten generiert, wie aus den Teilbildern A1_{NR} und B1 gewonnen werden.

Der erste dieser Werte wird aus der Bildzeile 3 für denjenigen Bildpunkt gewonnen, der nach Anwendung des halben Bewegungsvektors (vₓ · ½) verschoben die gleiche Position hat wie der zu generierende Bildpunkt im Teilbild B1⁻100. Das zweite Eingangssignal des Medianfilters wird aus dem Bildpunkt gleicher Zeilenposition der Zeile 1 des Teilbildes A1_{NR} gewonnen. Der Wert dieses Bildpunktes wird außerdem mit einem Faktor k multipliziert. Ferner wird derjenige Bildpunkt aus der Bildzeile 2 des Teilbildes B1, der nach Anwendung des halben negativen Bewegungsvektors (-vₓ · ½) gleiche Bildzeilenposition hat, wie der zu generierende Bildpunkt des Teilbildes B1⁻₁₀₀, mit einem Faktor 1-k multipliziert. Diese beiden Werte werden addiert und die Summe bildet das dritte Eingangssignal für die Medianfilterung. Durch die Medianfilterung wird aus diesen drei Eingangssignalen dasjenige ausgewählt, das den mittleren Momentan-Amplitudenwert aufweist. Dieses Signal ist der Wert des gekennzeichneten Bildpunktes des zweiten Teilbildes B1⁻₁₀₀ der Sequenz.

Wie schon die Darstellung gemäß Fig. 4 zeigt, ist für dieses Teilbild eine Bewegungskompensation für alle Signale erforderlich. Ferner muß eine Zeilenflimmer-Reduktion vorgenommen werden. Daher wird der Multiplexer 8 entsprechend der Darstellung gemäß Fig. 1 für die Generierung der Werte des Teilbildes B1⁻₁₀₀ auf seinen zweiten Eingang geschaltet, dem das Ausgangssignal der Anordnung 7 zur Zeilenflimmer-Reduktion zugeführt wird.

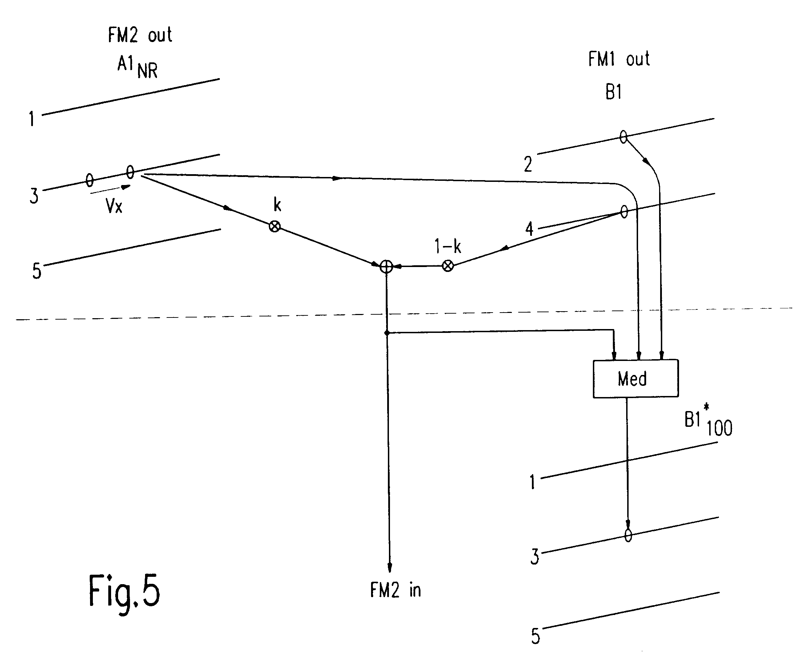

Fig. 5 zeigt ebenfalls eine Darstellung entsprechend den Fig. 3 bzw. 4, wobei jedoch in der Darstellung gemäß Fig. 5 das dritte Teilbild B1∗₁₀₀ der Sequenz generiert werden soll.

Für die Generierung dieses Teilbildes werden wiederum die beiden korrespondierenden Teilbilder A1 bzw. B1 des Original-Bildsignals herangezogen. Aus dem Teilbildspeicher 1 der Darstellung gemäß Fig. 1 wird das Teilbild B1 ausgelesen. Aus dem Teilbildspeicher 2 der Darstellung gemäß Fig. 1 wird das Teilbild A1 ausgelesen, das bereits rauschreduziert ist.

Es wird wiederum eine Medianfilterung vorgenommen, da das Ausgangsteilbild B1 die falsche vertikale Position hat. Das Ausgangsbild A1_{NR} hat darüber hinaus die falsche zeitliche Position, so daß für dieses Teilbild auch eine Bewegungskompensation vorgenommen werden muß.

Für die Generierung eines in der Fig. 5 markierten Bildpunktes der Bildzeile 3 des Teilbildes B1*₁₀₀ wird eine Medianfilterung aus drei Eingangssignalen vorgenommen.

Das erste dieser Eingangssignale stellt den Wert des Bildpunktes der Bildzeile 2 des Teilbildes B1 dar, der in seiner Bildzeile die gleiche Bildzeilenposition hat wie der zu generierende Bildpunkt in seiner Bildzeile. Ferner wird aus dem Teilbild A1, wie es aus dem zweiten Teilbildspeicher ausgelesen wird, derjenige Bildpunkt herangezogen, der nach Korrektur um den Bewegungsvektor vₓ die gleiche Zeilenposition hat wie der zu generierende Bildpunkt. Dieser bewegungskompensierte Bildpunkt stellt das zweite Eingangssignal des Medianfilters dar. Das dritte Eingangssignal wird aus einer Summe gebildet, in der einerseits der Wert gleicher Zeilenposition des Bildpunktes der Bildzeile 4 des Teilbildes B1, der mit einem Faktor 1-k multipliziert wird, und der Wert des zweiten Eingangssignals des Medianfilters, der mit einem Faktor k multipliziert wird. Diese Summe stellt das dritte Eingangssignal des Medianfilters dar und wird gleichzeitig als Eingangssignal in den zweiten Teilbildspeicher eingelesen, aus dem es für nachfolgend zu generierende Teilbilder wieder ausgelesen werden kann.

Der Multiplexer 8 des Blockschaltbildes gemäß Fig. 1 ist für die Generierung des dritten Teilbildes B1*₁₀₀ der Sequenz auf seinen zweiten Eingang geschaltet, da eine Zeilenflimmer-Reduktion sowie auch eine Bewegungskompensation vorgenommen werden muß.

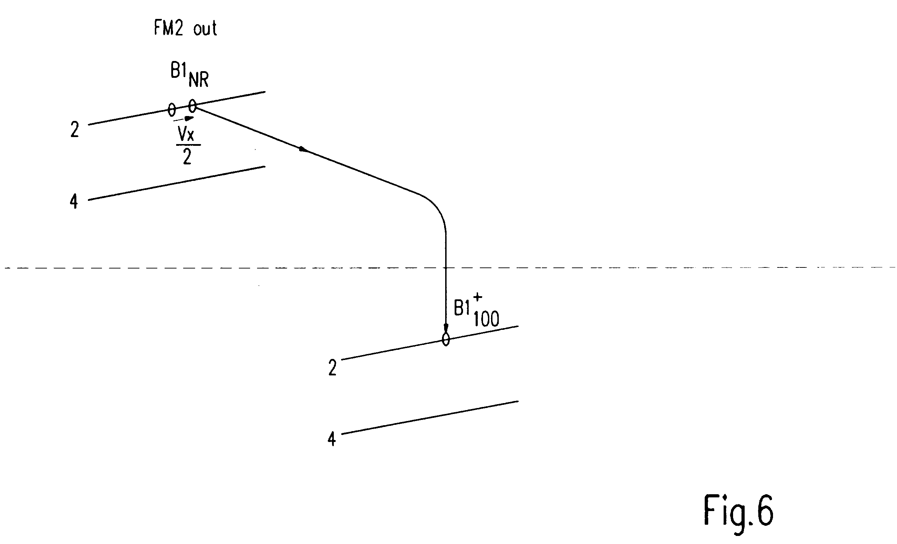

Fig. 6 zeigt eine Darstellung entsprechend den Fig. 3 bis 5, wobei in der Darstellung gemäß Fig. 6 die Werte des vierten Teilbildes B1⁺₁₀₀ der Sequenz gewonnen werden müssen.

Da das dazu eingesetzte Teilbild B1 (in rauschreduzierter Form) des Original-Bildsignals vertikal die richtige Position hat, d.h. also die gleiche Position hat wie das Bild B1⁺₁₀₀, ist hier eine Zeilenflimmer-Reduktion nicht erforderlich. Das Teilbild B1_{NR} hat jedoch zeitlich nicht die richtige Position, so daß eine Bewegungskompensation erforderlich ist.

Daher wird für einen Bildpunkt, wie er in Fig. 6 beispielhaft in Bildzeile 2 mit einer bestimmten Position gekennzeichnet ist, derjenige Bildpunkt des Teilbildes B1_{NR}, wie es aus dem Teilbildspeicher 2 ausgelesen wird, angewendet, der nach Korrektur um den halben Bewegungsvektor (vₓ · ½) die gleiche Zeilenposition hat wie der zu generierende Bildpunkt in seiner Bildzeile.

Da hier nur eine Bewegungskompensation (neben der Rauschreduktion) erforderlich ist, ist der Multiplexer 8 gemäß der Darstellung in Fig. 1 auf seinen dritten Eingang geschaltet.

Die Art der Generierung einer Sequenz der vier Teilbilder entsprechend den Fig. 3 bis 6 wiederholt sich laufend, wobei für jeweils zwei Ausgangsteilbilder des Original-Bildsignals vier korrespondierende Teilbilder des konvertierten Bildsignals gewonnen werden.

## Patentansprüche

1. Anordnung zur Konvertierung eines Original-Bildsignals, das als eine Folge von Vollbildern, von denen sich jedes aus zwei im Zeilensprungverfahren generierten Teilbildern zusammensetzt, in ein konvertiertes Bildsignal, das gegenüber dem Original-Bildsignal eine doppelte Teilbild-Frequenz aufweist,
dadurch gekennzeichnet, daß zur Verdoppelung der Teilbild-Frequenz eine Speicher-Anordnung (1, 2) vorgesehen ist, der eine Anordnung (5) zur Bewegungskompensation nachgeschaltet ist, deren Ausgangssignal auf eine Anordnung (6) zur Rauschreduktion geschaltet ist, daß eine Anordnung (7) zur Zeilenflimmerreduktion vorgesehen ist, der die Ausgangssignale der Anordnung (6) zur Rauschreduktion und der Anordnung (5) zur Bewegungskompensation zugeführt werden, und daß das konvertierte Bildsignal in Abhängigkeit der zeitlichen Lage eines zu generierenden Teilbildes des konvertierten Bildsignals aus dem Ausgangssignal der Anordnung (6) zur Rauschreduktion, der Anordnung zur Zeilenflimmerreduktion (7) oder der Anordnung zur Bewegungskompensation (5) gewonnen wird.

2. Anordnung nach Anspruch 1,
dadurch gekennzeichnet, daß das Original-Bildsignal in einen ersten Teilbildspeicher (1) eingelesen wird, aus dem es mit doppelter Frequenz ausgelesen wird, wobei jedes Teilbild zweimal hintereinander ausgelesen wird, und daß ein zweiter Teilbildspeicher (2) vorgesehen ist, in den jedes aus dem ersten Teilbildspeicher (1) zum zweiten Mal ausgelesene Teilbild nach Durchlaufen der Anordnung (6) zur Rauschreduktion eingelesen wird.

3. Anordnung nach Anspruch 2,
dadurch gekennzeichnet, daß den beiden Teilbildspeichern (1, 2) ein Zeilenspeicher (4) nachgeschaltet ist, welcher eine Bildzeile eines der Ausgangssignale der beiden Teilbildspeicher (1, 2) zwischenspeichert.

4. Anordnung nach einem der Ansprüche 1 bis 3,
dadurch gekennzeichnet, daß die Anordnung (7) zur Zeilenflimmerreduktion als Median-Filter ausgelegt ist, welches ausgangsseitig dasjenige Eingangssignal zur Verfügung stellt, das den mittleren Amplitudenwert aufweist.

5. Anordnung nach den Ansprüchen 2 und 3,
dadurch gekennzeichnet, daß der Anordnung (5) zur Bewegungskompensation die Ausgangssignale der beiden Teilbildspeicher (1, 2) und des Zeilenspeichers (4) zugeführt werden, und daß die Anordnung zur Bewegungskompensation aus den beiden aus den Teilbildspeichern (1, 2) ausgelesenen, aufeinanderfolgenden Teilbildern des Original-Bildsignals einen Bewegungsvektor ermittelt, der für eine Gruppe von Bildpunkten dieser Teilbilder deren Bewegung zwischen den beiden Teilbildern angibt.

6. Anordnung nach einem der Ansprüche 1 bis 5,
dadurch gekennzeichnet, daß die Anordnung zu zwei Teilbildern (A1, B1) eines Vollbildes des Original-Bildsignals, eine korrespondierende Sequenz von vier Teilbildern (A1₁₀₀, B⁻₁₀₀, B1*₁₀₀, B1⁺₁₀₀) des konvertierten Bildsignals generiert, wobei das erste Teilbild (A1₁₀₀) der Sequenz aus dem Ausgangssignal der Anordnung (6) zur Rauschreduktion, das zweite und dritte Teilbild (B1⁻₁₀₀, B1*₁₀₀) der Sequenz aus dem Ausgangssignal zur Zeilenflimmerreduktion (7) und das vierte Teilbild (B1⁺₁₀₀) der Sequenz aus der Anordnung zur Bewegungskompensation (5) gewonnen wird.

7. Anordnung nach den Ansprüchen 5 und 6,
dadurch gekennzeichnet, daß die Anordnung bei der Generierung des ersten Teilbildes (A1₁₀₀) der Sequenz den Wert eines jeden Bildpunktes einer Zeilenposition x in einer Bildzeile y gewinnt durch Addition
- des mit einem Faktor k multiplizierten Wertes des Bildpunktes der Zeilenposition x - vₓ in der Zeile y + 1 des letzten vor dem korrespondierenden Vollbild des Originalbildsignals übertragenen Teilbildes (B0) des Original-Bildsignals,
- und des mit einem Faktor 1 - k multiplizierten Wertes des Bildpunktes der Zeilenposition x der Bildzeile y des ersten Teilbildes (A1) des korrespondierenden Vollbildes des Original-Bildsignals,
wobei der Wert vₓ ein von der Anordnung (1) zur Bewegungskompensation gelieferter Bewegungsvektor ist und wobei der Wert k das Maß der Rauschreduktion bestimmt.

8. Anordnung nach den Ansprüchen 5 und 6,
dadurch gekennzeichnet, daß die Anordnung bei der Generierung des zweiten Teilbildes (B1⁻₁₀₀) der Sequenz den Wert eines jeden Bildpunktes einer Zeilenposition x in einer Bildzeile y gewonnen wird durch Medianfilterung aus
- dem Wert des Bildpunktes der Zeilenposition x + (vₓ · ½) in der Zeile y + 1 des ersten Teilbildes (A1) des korrespondierenden Vollbildes des Original-Bildsignals,
- dem Wert des Bildpunktes der Zeilenposition x + (vₓ · ½) in der Zeile y - 1 des ersten Teilbildes (A1) des korrespondierenden Vollbildes des Original-Bildsignals,
- und dem Wert der Summe aus
- dem mit einem Faktor k multiplizierten Wert des Bildpunktes der Zeilenposition x + (vₓ · ½) in der Zeile y - 1 des ersten Teilbildes (A1) des korrespondierenden Vollbildes des Original-Bildsignals
- und dem mit einem Faktor 1 - k multiplizierten Wert des Bildpunktes der Zeilenposition x - (vₓ · ½) in der Zeile y des zweiten Teilbildes des korrespondierenden Vollbildes des Original-Bildsignals,
wobei der Wert vₓ ein von der Anordnung (5) zur Bewegungskompensation gelieferte Bewegungsvektor ist, und wobei der Wert k das Maß der Rauschreduktion angibt.

9. Anordnung nach den Ansprüchen 5 und 6,
dadurch gekennzeichnet, daß bei der Generierung des dritten Teilbildes (B1*₁₀₀) der Sequenz der Wert eines jeden Bildpunktes einer Zeilenposition x in einer Bildzeile y gewonnen wird durch Medianfilterung aus
- dem Wert des Bildpunktes der Zeilenposition x + vₓ der Bildzeile y des ersten Teilbildes des korrespondierenden Vollbildes des Original-Bildsignals,
- dem Wert des Bildpunktes der Zeilenposition x in der Zeile y - 1 des zweiten Teilbildes des korrespondierenden Vollbildes des Original-Bildsignals,
- und dem Wert der Summe aus
- dem mit einem Faktor k multiplizierten Wert des Bildpunktes der Zeilenposition x + vₓ in der Bildzeile y des ersten Teilbildes des korrespondierenden Vollbildes
- und dem mit einem Faktor 1 - k multiplizierten Wert des Bildpunktes der Zeilenposition x in der Zeile y + 1 des zweiten Teilbildes des korrespondierenden Vollbildes des Original-Bildsignals,
wobei der Wert vₓ ein von der Anordnung (5) zur Bewegungskompensation gelieferter Bewegungsvektor ist, wobei der Wert k das Maß der Rauschreduktion bestimmt.

10. Anordnung nach den Ansprüchen 5 und 6,
dadurch gekennzeichnet, daß bei der Regenerierung des vierten Teilbildes (B1⁺₁₀₀) der Sequenz der Wert eines jeden Bildpunktes einer Zeilenposition x in einer Bildzeile y gewonnen wird, aus dem Wert des Bildpunktes der Zeilenposition x + (vₓ · ½) der Zeile y des zweiten Teilbildes (B1) des korrespondierenden Vollbildes des Original-Bildsignals, wobei der Wert vₓ ein von der Anordnung (5) zur Bewegungskompensation gelieferte Bewegungsvektor ist.

## Claims

1. An arrangement for converting an original picture signal representing a sequence of frames, each of which is composed of two interlaced fields, into a converted picture signal which has a double field frequency with respect to the original picture signal, characterized in that a memory arrangement (1, 2) is provided for doubling the field frequency, which arrangement precedes a motion compensation arrangement (5) whose output signal is applied to a noise reduction arrangement (6), in that a line flicker reduction arrangement (7) is provided which receives the output signals from the noise reduction arrangement (6) and the motion compensation arrangement (5), and in that the converted picture signal is obtained from the output signal of the noise reduction arrangement (6), the line flicker reduction arrangement (7) or the motion compensation arrangement (5), dependent on the position with respect to time of a field to be generated of the converted picture signal.

2. An arrangement as claimed in claim 1, characterized in that the original picture signal is written into a first field memory (1) from which it is read at the double frequency, each field being consecutively read twice, and in that a second field memory (2) is provided into which each field read for the second time from the first field memory (1) is written after it has passed through the noise reduction arrangement (6).

3. An arrangement as claimed in claim 2, characterized in that the two field memories (1, 2) precede a line memory (4) which buffers a picture line of one of the output signals of the two field memories (1, 2).

4. An arrangement as claimed in any one of claims 1 to 3, characterized in that the line flicker reduction arrangement (7) is a median filter whose output supplies that input signal which has the middle amplitude value.

5. An arrangement as claimed in claims 2 and 3, characterized in that the motion compensation arrangement (5) receives the output signals of the two field memories (1, 2) and the line memory (4), and in that the motion compensation arrangement determines a motion vector from the two consecutive fields of the original picture signal read from the field memories (1, 2), which motion vector indicates the motion between the two fields for a group of pixels of these fields.

6. An arrangement as claimed in any one of claims 1 to 5, characterized in that the arrangement generates a sequence of four fields (A1₁₀₀, B1⁻₁₀₀, B1*₁₀₀, B1⁺₁₀₀) of the converted picture signal corresponding to two fields (Al, B1) of a frame of the original picture signal, the first field (A1₁₀₀) of the sequence being obtained from the output signal of the noise reduction arrangement (6), the second and third fields (B1⁻₁₀₀, B1*₁₀₀) of the sequence being obtained from the output signal of the line flicker reduction arrangement (7), and the fourth field (B1⁺₁₀₀) of the sequence being obtained from the motion compensation arrangement (5).

7. An arrangement as claimed in claims 5 and 6, characterized in that, in generating the first field (A1₁₀₀) of the sequence, the arrangement obtains the value of each pixel of a line position x in a picture line y by addition of
- the value, multiplied by a factor k, of the pixel of the line position x-vₓ in the line y+1 of the last field (B0) of the original picture signal transmitted before the corresponding frame of the original picture signal,
- and the value, multiplied by a factor 1-k, of the pixel of the line position x of the picture line y of the first field (Al) of the corresponding frame of the original picture signal,
the value vₓbeing a motion vector supplied by the motion compensation arrangement (5) and the value k determining the measure of noise reduction.

8. An arrangement as claimed in claims 5 and 6, characterized in that, in generating the second field (B1⁻₁₀₀) of the sequence, the arrangement obtains the value of each pixel of a line position x in a picture line y by median filtering from
- the value of the pixel of the line position x+(vₓ.1/2) in the line y+1 of the first field (A1) of the corresponding frame of the original picture signal,
- the value of the pixel of the line position x+(vₓ.1/2) in the line y-1 of the first field (A1) of the corresponding frame of the original picture signal,
- and the value of the sum from
- the value, multiplied by a factor k, of the pixel of the line position x+(vₓ.1/2) in the line y-1 of the first field (A1) of the corresponding frame of the original picture signal,
- and the value, multiplied by a factor 1-k, of the pixel of the line position x-(vₓ.1/2) in the line y of the second field of the corresponding frame of the original picture signal,
the value vₓ being a motion vector supplied by the motion compensation arrangement (5) and the value k indicating the measure of noise reduction.

9. An arrangement as claimed in claims 5 and 6, characterized in that, in generating the third field (B1*₁₀₀) of the sequence, the arrangement obtains the value of each pixel of a line position x in a picture line y by median filtering from
- the value of the pixel of the line position x+vₓ in the picture line y of the first field of the corresponding frame of the original picture signal,
- the value of the pixel of the line position x in the line y-1 of the second field of the corresponding frame of the original picture signal,
- and the value of the sum from
- the value, multiplied by a factor k, of the pixel of the line position x+vₓ in the picture line y of the first field of the corresponding frame,
- and the value, multiplied by a factor 1-k, of the pixel of the line position x in the line y+1 of the second field of the corresponding frame of the original picture signal,
the value vₓ being a motion vector supplied by the motion compensation arrangement (5) and the value k determining the measure of noise reduction.

10. An arrangement as claimed in claims 5 and 6, characterized in that, in regenerating the fourth field (B1⁺₁₀₀) of the sequence, the value of each pixel of a line position x in a picture line y is obtained from the value of the pixel of the line position x+(vₓ.1/2) of the line y of the second field (B1) of the corresponding frame of the original picture signal, the value vₓ being a motion vector supplied by the motion compensation arrangement (5).

## Revendications

1. Dispositif de conversion d'un signal d'image original qui se compose comme une séquence d'images complètes dont chacune se compose de deux images partielles générées dans un procédé d'entrelacement de lignes en un signal d'image converti qui présente par rapport au signal d'image original une double fréquence d'images partielles,
caractérisé en ce que, pour le doublement de la fréquence d'images partielles, il est prévu un dispositif de mémoire (1,2) en aval duquel est monté un dispositif (5) pour la compensation du mouvement dont le signal de sortie est monté sur un dispositif (6) pour la réduction du bruit, en ce qu'il est prévu un dispositif (7) pour la réduction du sautillement auquel sont amenés les signaux de sortie du dispositif (6) pour la réduction du bruit et du dispositif (5) pour la compensation du mouvement et que le signal d'image converti, en fonction de la position temporelle d'une image partielle à générer du signal d'image converti, est obtenu à partir du signal de sortie du dispositif (6) pour la réduction du bruit, du dispositif pour la réduction du sautillement (7) ou du dispositif pour la compensation du mouvement (5).

2. Dispositif selon la revendication 1,
caractérisé en ce que le signal d'image original est enregistré dans une première mémoire d'images partielles (1) à partir de laquelle il est lu à une double fréquence, chaque image partielle étant lue deux fois successivement et qu'il est prévu une deuxième mémoire d'images partielles (2) dans laquelle chaque image partielle lue pour la deuxième fois à partir de la première mémoire d'images partielles (1) est enregistrée après avoir traversé le dispositif (6) pour la réduction du bruit.

3. Dispositif selon la revendication 2,
caractérisé en ce qu'une mémoire de lignes (4) qui procède à un enregistrement intermédiaire d'une ligne d'image d'un des signaux de sortie des deux mémoires d'images partielles (1, 2) est montée en aval des deux mémoires d'images partielles (1, 2).

4. Dispositif selon l'une des revendications 1 à 3,
caractérisé en ce que le dispositif (7) pour la réduction du sautillement est conçu comme un filtre par moyenne qui met à disposition côté sortie le signal de sortie qui présente la valeur d'amplitude moyenne.

5. Dispositif selon l'une des revendications 2 et 3,
caractérisé en ce qu'au dispositif (5) pour la compensation du mouvement sont amenés les signaux de sortie des deux mémoires d'images partielles (1, 2) et de la mémoire de lignes (4), et que le dispositif pour la compensation du mouvement détermine à partir des deux images partielles successives du signal d'image original lues des mémoires d'images partielles (1,2) un vecteur de mouvement qui indique, pour un groupe de pixels de ces images partielles, leur mouvement entre ces deux images partielles.

6. Dispositif selon l'une des revendications 1 à 5,
caractérisé en ce que le dispositif génère à partir des deux images partielles (A1, B1) d'une image complète du signal d'image original une séquence correspondante de quatre images partielles (A1₁₀₀, B⁻₁₀₀, B1*₁₀₀, B1⁺₁₀₀) du signal d'image converti, la première image partielle (A1₁₀₀) de la séquence se composant du signal de sortie du dispositif (6) pour la réduction du bruit, des deuxième et troisième images partielles (B1⁻₁₀₀, B1*₁₀₀) de la séquence du signal de sortie pour la réduction du sautillement (7) et la quatrième image partielle (B1⁺₁₀₀) de la séquence du dispositif pour la compensation du mouvement (5).

7. Dispositif selon l'une des revendications 5 et 6
caractérisé en ce que le dispositif, lors de la production de la première image partielle (A1₁₀₀) de la séquence, obtient la valeur de chaque pixel d'une position de ligne x dans une ligne d'image y par addition
- de la valeur multipliée par un facteur k du pixel de la position de ligne x-vₓ dans la ligne y+1 de la dernière image partielle (B0) du signal d'image original transmise avant l'image complète correspondante du signal d'image original,
- et de la valeur multipliée par un facteur 1-k du pixel de la position de ligne x de la ligne d'image y de la première image partielle (A1) de l'image complète correspondante du signal d'image original,
où la valeur vₓ est un vecteur de mouvement délivré par le dispositif (1) pour la compensation du mouvement et la valeur k détermine la mesure de la réduction du bruit.

8. Dispositif selon l'une des revendications 5 et 6,
caractérisé en ce que le dispositif produit pour la production de la deuxième image partielle (B1⁻₁₀₀) de la séquence la valeur de chaque pixel d'une position de ligne x dans une ligne d'image y par filtrage par moyenne à partir de - la valeur du pixel de la position de ligne x+(vₓ.1/2) dans la ligne y+1 de la première image partielle (A1) de l'image complète correspondante du signal d'image original,
- la valeur du pixel de la position de ligne x+(vₓ.1/2) dans la ligne y-1 dans la première image partielle (A1) de l'image complète correspondante du signal d'image original,
- et la valeur de la somme de
- la valeur multipliée par un facteur k du pixel de la position de ligne x+(vₓ.1/2) dans la ligne y-1 de la première image partielle (A1) de l'image complète correspondante du signal d'image original,
- et la valeur multipliée par un facteur 1-k du pixel de la position de ligne x-(vₓ.1/2) dans la ligne y de la deuxième image partielle de l'image complète correspondante du signal d'image original,
où la valeur vₓ est un vecteur de mouvement produit par le dispositif (5) pour la compensation du mouvement et la valeur k indique la mesure de la réduction du bruit.

9. Dispositif selon l'une des revendications 5 et 6,
caractérisé en ce que, pour la production de la troisième image partielle (B1*₁₀₀) de la séquence, la valeur de chaque pixel d'une position de ligne x dans une ligne d'image y est obtenue par filtrage par moyenne à partir de
- la valeur du pixel de la position de ligne x+vₓ dans la ligne d'image y de la première image partielle de l'image complète correspondante du signal d'image original,
- la valeur du pixel de la position de ligne x dans la ligne y-1 de la deuxième image partielle de l'image complète correspondante du signal d'image original,
- et la valeur de la somme de
- la valeur multipliée par un facteur k du pixel de la position de ligne x+vₓ dans la ligne y de la première image partielle de l'image complète correspondante du signal d'image original,
- et la valeur multipliée par un facteur 1-k du pixel de la position de ligne x dans la ligne y+1 de la deuxième image partielle de l'image complète correspondante du signal d'image original,
où la valeur vₓ est un vecteur de mouvement produit par le dispositif (5) pour la compensation du mouvement et la valeur k indique la mesure de la réduction du bruit.

10. Dispositif selon l'une des revendications 5 et 6,
caractérisé en ce que, pour la régénération de la quatrième image partielle (B1⁺₁₀₀) de la séquence, la valeur de chaque pixel d'une position de ligne x dans une ligne d'image y est obtenue à partir de la valeur du pixel de la position de ligne x+(vₓ.1/2) de la ligne y de la deuxième image partielle (B1) de l'image complète correspondante du signal d'image original, où la valeur vₓ est un vecteur de mouvement délivré par le dispositif (5) pour la compensation du mouvement.
